# EUROPEAN PATENT APPLICATION

(11) **EP 3 618 428 A1**
(43) Date of publication of application: **04.03.2020**
(21) Application number: 17907966.0
(22) Date of filing: 13.09.2017
(51) Int. Cl.: H04N 7/18, H04L 29/06

(54) **METHOD AND SYSTEM FOR STORING VIDEO, AND METHOD FOR ACCESSING VIDEO**

(30) Priority: 26.04.2017 CN 201710284102
(71) Applicant: Hangzhou Hikvision Digital Technology Co., Ltd., Hangzhou, Zhejiang 310051 (CN)
(72) Inventor: YANG, Dawei, Hangzhou Zhejiang 310051 (CN)
(74) Representative: BRP Renaud & Partner mbB Rechtsanwälte Patentanwälte Steuerberater
(86) International application number: PCT/CN2017/101530
(87) International publication number: WO 2018/196257

(57) **Abstract**

The embodiment of the present invention provides a video storage, a video access method, and a video storage system. The video storage method is applicable to a service provider terminal, and includes: determining user information corresponding to a video to be stored; sending a video storage instruction to a network storage server, wherein, the instruction includes the user information and time information corresponding to the video to be stored; generating an access identifier according to an address information of the network storage server, the user information and the time information corresponding to the video to be stored; and providing the access identifier to a user corresponding to the video to be stored. The user terminal obtains and analyzes the access identifier provided by the service provider terminal, to search for and obtain the video to be accessed by using the address information of the network storage server and the user information and the time information corresponding to the video to be accessed. The video storage and access method and the apparatus according to embodiments of the present application improve the security of the video during a user's access to the video.

## Description

The present application claims the priority to Chinese patent application No. 201710284102.4 entitled "METHOD AND SYSTEM FOR STORING VIDEO, AND METHOD FOR ACCESSING VIDEO", and filed with the China National Intellectual Property Administration on April 26, 2017, which is incorporated herein by reference in its entirety.

### Technical Field

The application relates to the field of surveillance service technology, in particular to a video storage method, a video access method and a video storage system.

### BACKGROUND

With the improvement of people's safety awareness, most service places are provided with video surveillances. The service provider provides a surveillance video to the user, and the user can have supervision on the service provided by the service provider by checking the surveillance video. For example, users can check whether the cake making process is hygienic, whether the services provided by government staff are efficient and standardized, and whether the doctors are dedicated to the treatment process. In addition, once the contradiction between the service provider and the user occurs, the contradiction between the service provider and the user may be reduced by restoring the scene through the video surveillances.

In an existing video surveillance system, a hard disk video recorder is used as a video server. Videos obtained are saved to the hard disk video recorder. According to the address of the hard disk video recorder which saves the video, the service provider generates an access identifier and provides the access identifier to the user. The user obtains the address of the hard disk video recorder from the access identifier. The video on the hard disk video recorder can be accessed through the address.

However, in the existing methods, users can not only check their own videos through the address of the hard disk video recorder, but also check videos about other users. This makes the videos of each user on the hard disk video recorder unsafe.

### Summary

Embodiments of the present application provide a video storage method, a video access method, and a video storage system to improve the security of video. Specifically, the following aspects are included.

In a first aspect, the embodiment of the present application provides a video storage method, applicable to a service provider terminal. The method includes:
determining user information corresponding to a video to be stored;
sending a video storage instruction to a network storage server, wherein, the video storage instruction includes the user information and time information corresponding to the video to be stored;
generating an access identifier according to address information of the network storage server, the user information and the time information corresponding to the video to be stored; and
providing the access identifier to a user corresponding to the video to be stored.

Optionally, sending a video storage instruction to a network storage server includes:
sending a video-recording start instruction to the network storage server, wherein the video-recording start instruction includes the user information and a camera identifier corresponding to the video to be stored;
sending a video-recording end instruction to the network storage server when video-recording of the video to be stored is ended, wherein the time information corresponding to the video to be stored is a time period between a time point corresponding to the video-recording start instruction and a time point corresponding to the video-recording end instruction;
generating an access identifier according to address information of the network storage server, the user information and the time information corresponding to the video to be stored includes:
   generating an access identifier according to the address information of the network storage server, the user information and the time information corresponding to the video to be stored and the camera identifier.

Optionally, the video storage method further includes:
generating a random access password for accessing the video to be stored;
the video storage instruction also includes the random access password;
generating an access identifier according to address information of the network storage server, the user information and the time information corresponding to the video to be stored includes:
   generating an access identifier according to the address information of the network storage server, the user information and the time information corresponding to the video to be stored and the random access password.

Optionally, before generating an access identifier according to address information of the network storage server, the user information and the time information corresponding to the video to be stored, the method further includes:
encrypting the address information of the network storage server, the user information and the time information corresponding to the video to be stored;
generating an access identifier according to address information of the network storage server, the user information and the time information corresponding to the video to be stored includes:
   generating an access identifier according to the encrypted address information of the network storage server, the encrypted user information and the encrypted time information corresponding to the video to be stored.

Optionally, the user information includes a user name and a password.

Optionally, the access identifier includes a two-dimensional code, a barcode, and a character code.

In a second aspect, the embodiment of the present application further provides a video access method, applicable to a user terminal and including:
obtaining an access identifier corresponding a video to be accessed, wherein the access identifier includes address information of a network storage server that stores the video to be accessed, user information and time information corresponding to the video to be accessed;
analyzing the access identifier to obtain the address information of the network storage server that stores the video to be accessed, and the user information and time information corresponding to the video to be accessed; and
logging in to the network storage server by using the user information, and searching for and obtaining the video to be accessed in the network storage server according to the time information.

Optionally, the access identifier also includes: a random access password for accessing the video to be accessed.
analyzing the access identifier includes:
analyzing the access identifier to obtain the address information of the network storage server that stores the video to be accessed, the user information and time information corresponding to the video to be accessed and the random access password.
logging in to the network storage server by using the user information, and searching for and obtaining the video to be accessed in the network storage server according to the time information includes:
   logging in to the network storage server by using the user information, and searching for and obtaining the video to be accessed in the network storage server according to the time information and the random access password.
   Optionally, the access identifier further includes: a camera identifier corresponding to the video to be accessed;
   analyzing the access identifier includes:
      analyzing the access identifier to obtain the address information of the network storage server that stores the video to be accessed, the user information and time information corresponding to the video to be accessed and the camera identifier corresponding to the video to be accessed.
      logging in to the network storage server by using the user information, and searching for and obtaining the video to be accessed in the network storage server according to the time information includes:
         logging in to the network storage server by using the user information, and searching for and obtaining the video to be accessed in the network storage server according to the time information and the camera identifier.

Optionally, obtaining the address information of the network storage server that stores the video to be accessed, and the user information and the time information corresponding to the video to be accessed includes:
decrypting encrypted address information of the network storage server that stores the video to be accessed, encrypted user information and time information corresponding to the video to be accessed, to obtain the address information of the network storage server that stores the video to be accessed, the user information and the time information corresponding to the video to be accessed.

Optionally, the user information includes a user name and a password.

Optionally, the access identifier includes a two-dimensional code, a bar code, and a character code.

In a third aspect, the embodiment of the present application further provides a video storage system, including: a service provider terminal, a network storage server, and a user terminal.
the service provider terminal is configured for determining user information corresponding to a video to be stored, and sending a video storage instruction to the network storage server, wherein, the video storage instruction includes the user information and time information corresponding to the video to be stored;
the network storage server is configured for recording the video to be stored according to the user information and the time information in a video-recording start instruction;
the service provider terminal is further configured for generating an access identifier according to address information of the network storage server, the user information and the time information corresponding to the video to be stored, and providing the access identifier to the user terminal;
the user terminal is configured for obtaining and analyzing the access identifier to obtain the address information of the network storage server that stores the video to be stored, and the user information and the time information corresponding to the video to be stored; logging in to the network storage server by using the user information, and searching for and obtaining the video to be stored in the network storage server according to the time information.

Optionally, the service provider terminal is further configured for sending a video-recording start instruction to the network storage server, wherein the video-recording start instruction includes the user information and a camera identifier corresponding to the video to be stored; and sending a video-recording end instruction to the network storage server when video-recording of the video to be stored is ended, wherein the time information corresponding to the video to be stored is a time period between a time point corresponding to the video-recording start instruction and a time point corresponding to the video-recording end instruction.

The network storage server is configured for starting video-recording of the video to be stored when receiving the video-recording start instruction, and ending the video-recording when receiving the video-recording end instruction.

The service provider terminal is further configured for generating an access identifier according to the address information of the network storage server, the user information and the time information corresponding to the video to be stored and the camera identifier.

The user terminal is further configured for obtaining and analyzing the access identifier to obtain the address information of the network storage server that stores the video to be stored, the user information and the time information corresponding to the video to be stored and the camera identifier corresponding to the video to be stored; logging in to the network storage server by using the user information, and searching for and obtaining the video to be stored in the network storage server according to the time information and the camera identifier.

Optionally, the service provider terminal is further configured ffor sending a random access password for accessing the video to be stored to the network storage server; and generating an access identifier according to the address information of the network storage server, the user information and the time information corresponding to the video to be stored and the random access password.

The user terminal is further configured for obtaining and analyzing the access identifier to obtain the address information of the network storage server that stores the video to be stored, the user information and the time information corresponding to the video to be stored and the random access password; logging in to the network storage server by using the user information; and searching for and obtaining the video to be stored in the network storage server according to the time information and the random access password.

Optionally, the service provider terminal is further configured for encrypting the address information of the network storage server, the user information and the time information corresponding to the video to be stored; and generating an access identifier according to the encrypted address information of the network storage server, the encrypted user information and the encrypted time information corresponding to the video to be stored.

The user terminal is further configured for decrypting the encrypted address information of the network storage server that stores the video to be stored, the encrypted user information and the encrypted time information corresponding to the video to be stored, to obtain the address information of the network storage server that stores the video to be stored, the user information and the time information corresponding to the video to be stored.

Optionally, the service provider terminal is further configured for adding a network camera to the network storage server.

The network storage server is configured for video recording with the network camera added by the service provider terminal.

Optionally, the user information includes a user name and a password.

Optionally, the access identifier includes a two-dimensional code, a bar code, and a character code.

In a fourth aspect, the embodiment of the present application further provides a video storage device, including: a processor, a memory, a communication interface, and a bus.

The processor, the memory and the communication interface are communicatively connected with each other via the bus.

The memory stores executable program codes.

The processor reads the executable program code stored in the memory to execute a program which, when executed, performs the video access method of the first aspect.

In a fifth aspect, the embodiment of the present application further provides a video access device, including: a processor, a memory, a communication interface, and a bus.

The processor, the memory and the communication interface are communicatively connected with each other via the bus;

The memory stores executable program codes.

The processor reads the executable program code stored in the memory to execute a program which, when executed, performs the video access method of the second aspect.

In a sixth aspect, the embodiment of the present application further provides a storage medium having an executable code stored thereon which, when executed, performs the video storage method of the first aspect.

In a seventh aspect, the embodiment of the present application further provides a storage medium having an executable code stored thereon which, when executed, performs the video access method of the second aspect.

In an eighth aspect, the embodiment of the present application further provides an application program which, when executed, performs the video storage method of the first aspect.

In a ninth aspect, the embodiment of the present application further provides an application program which, when executed, performs the video access method of the second aspect.

The embodiment of the present application provides a video storage, a video access method, and a video storage system. The service provider terminal may associate a video to be stored with a user by determining the user information corresponding to the video to be stored. The service provider terminal sends a video storage instruction to the network storage server, wherein the video storage instruction includes user information and time information corresponding to the video to be stored; generates an access identifier according to the address information of the network storage server, the user information and the time information corresponding to the video to be stored; provides the access identifier to a user corresponding to the video to be stored. The user terminal obtains the access identifier provided by the service provider terminal, and analyzes the access identifier to obtain address information of the network storage server that stores the video to be accessed, user information and time information corresponding to the video to be accessed; logs in to the network storage server by using the user information, and searches for and obtains the video to be accessed according to the time information in the network storage server. In this way, a user may only access an associated video in the network storage server, but has no access to videos associated with other users. This improves the security of a videos for each user. It should be understood that any product or method for implementing the embodiments of the present application does not necessarily achieve all of the advantages described above.

### Brief description of the drawings

In order to more clearly illustrate the embodiments of the present application and the technical solutions of the prior art, the following description of the embodiments and the drawings used in the prior art will be briefly introduced, it is noted that the drawings in the following description are only some embodiments of the application and for those skilled in the art, other drawings can be obtained easily according to these drawings.
FIG. 1 is a flowchart of a video storage method according to an embodiment of the present application;
Fig. 2 is a flow chart of a video access method according to an embodiment of the present application;
Fig. 3 is a block diagram of a video storage system according to an embodiment of the present application;
Fig. 4 is a block diagram of a video storage apparatus according to an embodiment of the present application;
Fig. 5 is a block diagram of a video accessing apparatus according to an embodiment of the present application;
Fig. 6 is a block diagram of a video storage device according to an embodiment of the present application;
Fig. 7 is a block diagram of a video access device according to an embodiment of the present application.

### DETAILED DESCRIPTION

In order to make objectives, technical solutions and advantages of the present disclosure more apparent, the present disclosure is described in detail with reference to the accompanying drawings and the detailed description below. Obviously, the embodiments described are only some of the embodiments of the present disclosure instead of all the embodiments. All other embodiments obtained by those of ordinary skills in the art based on the embodiments herein without any creative efforts are within the scope of the present disclosure.

In the embodiment of the present application, different users have different rights to the video to be stored. The administrator corresponding to the service provider terminal, that is, the administrator who provides a video, may record or manage the video to be stored in real time, and may set which users have the right to access the video to be stored. Specifically, in practice, the administrator uses the service provider terminal to manage the video to be stored. And the user of a user terminal, that is, the user who accepts the service, accesses the video to be stored through the user terminal according to the authority set by the administrator, specifically including previewing or downloading the video.

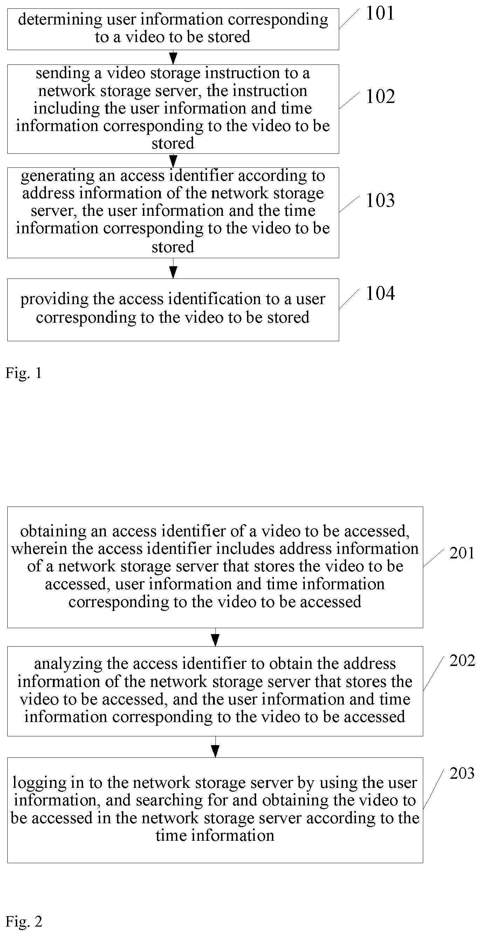

FIG. 1 is a flowchart of a video storage method according to an embodiment of the present application. The video storage method according to the embodiment of the present application is described in detail with reference to FIG. l.The method includes:
Step 101, determining user information corresponding to a video to be stored.

The video storage method according to an embodiment of the present application is applied to a service provider terminal, and the service provider terminal may be an electronic device, a mobile terminal software, or the like.

In general, each video to be stored corresponds to a specific user. The service provider terminal determines the user information corresponding to each video to be stored by associating each video to be stored with its corresponding user, i.e., associating the user who can access the video to be stored with the video to be stored, so that each video to be stored can only be accessed by the associated user. In specific, user information may include a user name and a password. In practice, the user information may further include an authentication code and the like in order to enhance the security of the user's access to the video to be stored.

Step 102, sending a video storage instruction to a network storage server, the instruction includes the user information and time information corresponding to the video to be stored.

In embodiments of the present application, the service provider terminal stores the video to be stored through the network storage server so that the user may access the video to be stored by accessing the network storage server. The network storage server can be connected to the Internet. As such, any user can access the network storage server at any time from any place if he knows the address of the network storage server, and then access the video stored in the network storage server. Specifically, the network storage server may include cloud storage.

The network storage server may store a video to be stored that is being video-recorded in real-time, or may store a video to be stored that has been recorded. In an embodiment of the present application, a network camera may be dynamically added to the network storage server and records video in real time. The video to be stored obtained by the real-time recording is stored to the network storage server. It is also possible to directly obtain a video that have been recorded and stored in a hard disk video recorder, and store the directly obtained video to the network storage server.

Specifically, in practice, the service provider terminal sends a video storage instruction to the network storage server, so that the network storage server records a video in real time or directly obtains a video that have been recorded according to the video storage instruction sent by the service provider terminal. The video storage instruction include user information and time information corresponding to the video to be stored, wherein the user information is the information of the user associated with the video to be stored, that is, the information of the user that can access the video to be stored. The time information is a time period between the start and the end of the real-time recording, or a time period between the start and end of the directly obtained video that has been recorded.

Step 103, generating an access identifier according to address information of the network storage server, the user information and the time information corresponding to the video to be stored.

After the video to be stored is stored on the network storage server, the address of the network storage server that stores the video to be stored is obtained. The address of the network storage server that stores the video to be stored, and the user information and time information corresponding to the video to be stored are combined to generate an access identifier for accessing the video to be stored. The access identifier may be in the form of a QR code, a barcode, a string, or the like.

Step 104, providing the access identifier to a user corresponding to the video to be stored.

After the service provider terminal generates the access identifier for accessing the video to be stored, the access identifier is provided to a user so that the user accesses an associated video to be stored according to the access identifier. The generated access identifier may be provided to the user in real time, or the generated access identifier may be stored first, and then provided to the user when the user needs it. Specifically, the access identifier may be sent to the user by sending a message actively, or when a request sent by the user is received, the access identifier of the video to be stored requested by the user is provided to the user.

The video storage method according to an embodiment of the present application associates a video to be stored with a user, determines the user information corresponding to the video to be stored, and sends video storage instructions to the network storage server so that the network storage server records a video in real time or obtains a video that has been recorded and stored in a local memory such as a hard disk video recorder. Then, an access identifier for accessing the video to be stored is generated according to the address information of the network storage server that stores the video to be stored, the user information and time information corresponding to the video to be stored. The access identifier is provided to the user associated with the video to be stored. Through the video storage method according to an embodiment of the present application, each video to be stored has an access identifier generated according to the address information of the network storage server that stores the video to be stored, the user information and time information corresponding to the video to be stored, so that the user who has the right to access the video to be stored can access the video to be stored according to the information included in the access identifier. A user can only access an associated video with self, but cannot access videos associated with other users. This improves the security of the videos and protects the private information of the user.

In an optional embodiment of the present application, the service provider terminal sends a video storage instruction to the network storage server, so that the network storage server records the video in real time. This may specifically include the following operations.

First, a video-recording start instruction is sent to the network storage server. The video-recording start instruction includes user information and a camera identifier corresponding to the video to be stored.

Then, a video-recording end instruction is sent to the network storage server when recording of the video to be stored is complete. The time period between a time point corresponding to the video-recording start instruction and a time point corresponding to the video-recording end instruction is the time information corresponding to the video to be stored.

The service provider terminal first logs in to the network storage server through administrator information. Specifically, the administrator information may include an administrator name and password. Then, according to actual needs, a network camera is dynamically added to the network storage server. A video-recording start instruction is sent to the network storage server to trigger the start of recording. When the network storage server receives an instruction sent by the service provider terminal, it starts recording video and records the time point at which the recording video starts. Further, after the network storage server receives a video-recording end instruction sent by the service provider terminal, the network storage server ends the video-recording, and records the time point at which the video recording ends. The time period between the time point when the video recording starts and the time point when the video recording ends is the time information corresponding to the video to be stored.

When the service provider terminal sends video storage instructions to the network storage server to enable the network storage server to record videos in real-time, because the network camera for real-time video recording is dynamically selected, in order to determine the location of the video to be stored in the network storage server, in addition to the user information and time information corresponding to the video to be stored, it is also necessary to know the channel of the video to be stored in the video recorder, that is, to know the network camera that records the video. Therefore, when the video to be stored is obtained through real-time recording by a network storage server, an access identifier is generated corresponding to the address information of the network storage server, the user information and time information corresponding to the video to be stored and a camera identifier.

Through a combination of user information and time information corresponding to the video to be stored with the camera identifier, the video to be stored can be located more accurately and quickly, so that users can access the video to be stored more safely and quickly. In addition, through the network storage server, the service provider terminal may directly provide the video to be stored to a user. The user may directly receive the service provided by the service provider terminal in the network storage server, that is, previewing or downloading of a video provided by the service provider terminal.

Furthermore, the service provider terminal may randomly generate a random access password for accessing the video to be stored while sending the video-recording start instruction to the network storage server. When the random access password for accessing the video to be stored is generated, and the random access password is further included in the video storage instruction sent by the service provider terminal to the network storage server. The process of generating an access identifier includes: generating an access identifier corresponding to the address information of the network storage server, the user information and time information corresponding to the video to be stored and the random access password.

The random access password provides further protection to a video to be stored. To access the video to be stored, in addition to the user information and time information corresponding to the video to be stored, the address information of the network storage server that stores the video to be stored, and the identifier of the camera that records the video to be stored in real time, the random access password is also needed. This further improves the security of the video to be stored.

In order to further improve the security of video in the process of accessing the video to be stored, firstly, the information for generating the access identifier is encrypted, and then an access identifier corresponding to the encrypted information is generated. It should be noted that any encrypting method known in the art can be employed. Embodiments of the present application are not limited in this aspect..

In an optional implementation of the video storage method according to an embodiment of the present application, the address information of the network storage server, the user information and time information corresponding to the video to be stored are encrypted. An access identifier is generated according to the encrypted address information of the network storage server, and the encrypted user information and encrypted time information corresponding to the video to be stored. In case where service provider terminal sending a video-recording start instruction to the network storage server, the network storage server performs real-time recording when receiving a video-recording start instruction. The video-recording start instruction further includes a camera identifier. In an optional embodiment of the present application, the address information of the network storage server that stores the video to be stored, the user information and time information corresponding to the video to be stored, and the camera identifier are encrypted. An access identifier is generated according to the encrypted address information of the network storage server that stores the video to be stored, the encrypted user information and the encrypted time information corresponding to the video to be stored, and the encrypted camera identifier. Further, if the information for generating the access identifier also includes a random access password, the address information of the network storage server that stores the video to be stored, the user information and time information corresponding to the video to be stored, and the random access password are encrypted. An access identifier is generated according to the encrypted address information of the network storage server that stores the video to be stored, the encrypted user information and the encrypted time information corresponding to the video to be stored, and the encrypted random access password.

The embodiment of the present application also provides a video access method corresponding to the process of storing a video by the service provider terminal. FIG. 2 is a flowchart of a video access method according to an embodiment of the present application. The video access method according to the embodiment of the present application is described in detail with reference to FIG. 2. The method includes:
Step 201, obtaining an access identifier of a video to be accessed, wherein the access identifier includes address information of a network storage server that stores the video to be accessed, user information and time information corresponding to the video to be accessed.

The video access method according to an embodiment of the present application is applied to a user terminal, wherein the user terminal includes an electronic device, a mobile terminal software, and the like.

A user obtains an access identifier provided by the service provider terminal through the user terminal. Specifically, the access identifier may be in the form of a scanning two-dimensional code, a barcode, or a decoding string. In practice, when the user terminal needs to access the video to be accessed, it may actively send a request to the service provider terminal to obtain the access identifier, or passively receive the access identifier sent by the service provider terminal.

In addition, it should be noted that the user information corresponding to the video to be accessed may include a user name and a password for the user who can access the video to be accessed. In practice, the user information may also include information such as a authentication code. The time information corresponding to the video to be accessed includes a time period between the start and the end of recording of the video to be accessed.

Step 202, analyzing the access identifier to obtain the address information of the network storage server that stores the video to be accessed, and the user information and time information corresponding to the video to be accessed.

After the access identifier is obtained, corresponding to the process of generating an access identifier by the service provider terminal that stores the video, the user terminal analyzes the access identifier obtained from the service provider terminal, and obtains the address information of the network storage server that stores the video to be accessed, the user information and time information corresponding to the video to be accessed.

Step 203, logging in to the network storage server by using the user information, and searching for and obtaining the video to be accessed in the network storage server according to the time information.

When storing a video, the service provider terminal associates the video with a user. Therefore, after obtaining the address information of the network storage server that stores the video to be accessed, and the user information and time information corresponding to the video to be accessed, the user terminal may log in to the network storage server according to the user information and the address of the network storage server that stores the video to be accessed. The user terminal then searches, according to the time information corresponding to the video, for the video to be accessed in the network storage server and access the video. Specifically, the user may review or download the video to be accessed to a local memory. Moreover, it should be noted that according to the user information and time information corresponding to the video to be accessed, the video to be accessed can only be accessed by the authorized user through the user terminal.

In the video access method provided by embodiments of the present application, the user terminal obtains an access identifier provided by the service provider terminal, analyzes the access identifier to obtain user information and time information corresponding to a video to be accessed, and searches for and accesses the video to be accessed according to the user information and the time information corresponding to the video to be accessed. When having an authority, i.e., knowing the user information and the time information corresponding to the video to be accessed, a user may access the video to be accessed through the user terminal. In this way, a user can only access the video associated with him. This improves the security of the video associated then user and protects the privacy information of the user.

In an optional implementation of the video access method according to an embodiment of the present application, the access identifier includes not only address information of the network storage server that stores the video to be accessed, user information and time information corresponding to the video to be accessed, but also a random access password for accessing the video to be accessed. Therefore, after obtaining the access identifier provided by the service provider terminal that further includes the random access password, the user terminal analyzes the access identifier to obtain the address information of the network storage server that stores the video to be accessed, the user information and the time information corresponding to the video to be accessed, and the random access password. Then the user terminal searches for and obtains the video to be accessed according to the address information of the network storage server, the user information and the time information corresponding to the video to be accessed, and the random access password. Specifically, the user terminal may log in to the network storage server according to the address of the network storage server and the user information, and search for the video to be accessed in the network storage server according to the time information, and then obtains the video to be accessed through the random access password.

If the access identifier provided by the service provider terminal also includes a random access password, in addition to the address of the network storage server and the user information and time information corresponding to the video to be accessed, the video to be accessed is further protected by random access password. Only the user who passes a random access password authentication can access the video to be accessed. This further improves the security of the video to be accessed.

In a video storage method as described above, when the service provider terminal sends an instruction to the network storage server to enable the network storage server to record in real time, the generated access identifier further includes a camera identifier. The camera identifier is used to indicate a channel according to the video to be accessed. The camera identifier is the identifier of a camera selected by the network storage server for real-time video recording. Therefore, in an optional implementation of the embodiment of the present application, the access identifier obtained by the user terminal may also include the identifier of the camera that records the video to be accessed. After the access identifier is obtained, the access identifier is analyzed to obtain the address information of a network storage server that stores the video to be accessed, the user information and the time information corresponding to the video to be accessed and the identifier of the camera that records the video to be accessed. Then the user terminal searches for and obtains the video to be accessed according to the address information of the network storage server, the user information and the time information corresponding to the video to be accessed, and the camera identifier. Specifically, first, the user terminal logs in to the network storage server according to the address of the network storage server and the user information. Then the user terminal searches for and obtains the video to be accessed according to the time information and the camera identifier.

Using the time information in combination with the camera identifier, the video to be accessed may be quickly found in the network storage server. As such, the video to be accessed can be quickly found while the security of the video to be accessed is improved.

Further, in an another optional implementation of the embodiment of the present application, the access identifier may include address information of a network storage server that stores the video to be accessed, user information and time information corresponding to the video to be accessed, an identifier of camera that captures the video to be accessed, and a random access password. In comparison with the quick acquisition of a video to be accessed with the address information of the network storage server, the user information and the time information corresponding to the video to be accessed, and the camera identifier, the use of a random access password allows a further increased security of the video to be accessed.

Before generating the access identifier, the service provider terminal may encrypt the address information of the network storage server that stores the video to be accessed, and the user information and the time information corresponding to the video to be accessed. Therefore, in the process of analyzing the access identifier, the user terminal needs to decrypt the encrypted information, so as to obtain the address information of the network storage server that stores the video to be accessed, and the user information and the time information corresponding to the video to be accessed. It is appreciated that when the service provider terminal generates the access identifier, it may further use a random access password or a camera identifier, in addition to the address information of the network storage server, the user information and time information corresponding to the video to be accessed. Therefore, in practice, the analysis of the access identifier further includes decrypting the encrypted address information of the network storage server that stores the video to be accessed, the encrypted user information and time information corresponding to the video to be stored, the camera identifier; or decrypting the encrypted address information of the network storage server that stores the video to be accessed, the encrypted user information and time information corresponding to the video to be stored, and the random access password and the like. The decrypting process corresponds to the process of encryption in which the above-mentioned service provider terminal generates the access identifier, the detail of which is not repeated here.

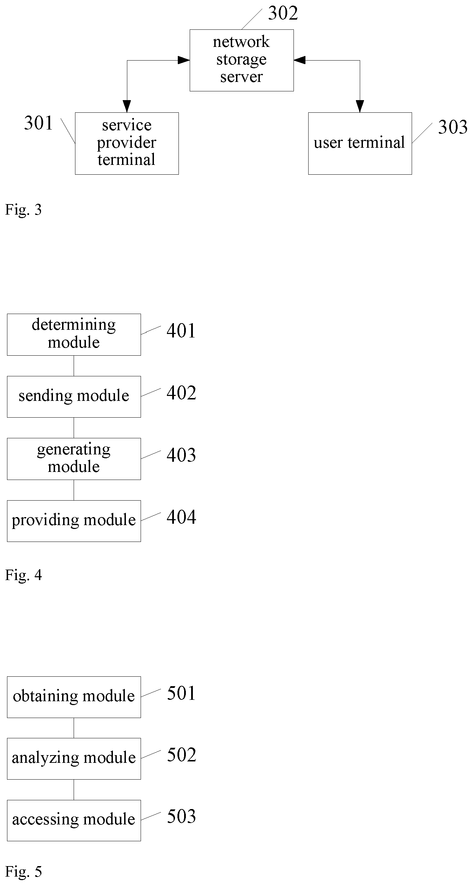

The embodiment of the present application further provides a video storage system. FIG. 3 is a structural diagram of a video storage system according to an embodiment of the present application. The video storage system according to the embodiment of the present application is described in detail with reference to FIG. 3, including: a service provider terminal 301, a network storage server 302 and a user terminal 303.

The service provider terminal 301 is configured for determining user information corresponding to the video to be stored, and sending a video storage instruction to the network storage server 302. The video storage instruction includes the user information and the time information corresponding to the video to be stored.

The service provider terminal 301 associates each video with a user and generates the user information based on a corresponding video.

Specifically, the service provider terminal 301 sends a video storage instruction to the network storage server, so that the network storage server 302 records the video in real time or directly obtains the video that have been recorded according to the video storage instruction sent by the service provider terminal 301. The video storage instruction includes user information and time information corresponding to a video to be stored. The user information is the information of the user associated with the video to be stored, that is, the information of the user that can access the video to be stored. The time information is a time period between the start of recording and the end of recording during real-time recording, or a time period between the start and end of the directly obtained video that has been recorded.

In addition, it should be noted that the user information corresponding to the video to be stored may include a user name and a password corresponding to the user who can access the video to be stored. In practice, the user information may also include information such as authentication code. The time information corresponding to the video to be stored includes a time period between the start and the end of recording of the video to be stored.

The network storage server 302 is configured for recording a video to be stored according to the user information and the time information in the video-recording start instruction.

The service provider terminal stores the video to be stored through the network storage server 302. A user may access the video to be stored by accessing the network storage server 302. The network storage server 302 can be connected to Internet, so that a user can access the network storage server 302 at any time from any place if he knows the address of the network storage server 302, and then access the video stored in the network storage server 302. Specifically, the network storage server 302 may include cloud storage.

The network storage server 302 may store a video to be stored that is being video-recorded in real-time, or may store a video to be stored that has been recorded. In an embodiment of the present application, a network camera may be dynamically added to the network storage server 302 and records video in real time. The video to be stored obtained by the real-time recording is stored to the network storage server 302. It is also possible to directly obtain a video that have been recorded and stored in a hard disk video recorder, and store the directly obtained video to the network storage server 302. Specifically, the network storage server 302 receives a video storage instruction sent by the service provider terminal 301, and then makes a video recording of a video to be stored records a video according to the user information and time information in the video storage instruction, thus completing the video recording of the video to be stored.

The service provider terminal 301 is further configured for generating an access identifier corresponding to the address information of the network storage server 302, the user information and the time information corresponding to the video to be stored, and providing the access identifier to the user terminal 303.

After the video to be stored is stored to the network storage server 302, the address of the network storage server 302 that stores the video to be stored is obtained. The address of the network storage server 302 that stores the video to be stored and the user information and the time information corresponding to the video to be stored are combined to generate an access identifier of the video to be stored. The access identifier may be in the form of a QR code, a barcode, a string, or the like. The access identifier is provided to the user terminal 303.

The user terminal 303 is configured for obtaining and analyzing the access identifier to obtain the address information of the network storage server 302 that stores the video to be stored, and the user information and time information corresponding to the video to be stored. The user terminal 303 logs in to the network storage server 302 by using the user information, and searches for and obtains the video to be stored in the network storage server 302 according to the time information.

The user terminal 303 obtains the access identifier provided by the service provider terminal 301 that is in the form of a scanning two-dimensional code, a barcode, or a decoding string. In practice, when the user terminal 303 needs to access the video to be stored, it may actively send a request to the service provider terminal 301 to obtain the access identifier, or passively receive the access identifier sent by the service provider terminal 301.

In correspondence with the case in which the service provider terminal 301 generates an access identifier when the video is stored, the user terminal 303 analyzes the access identifier obtained from the service provider terminal 301 to obtain the address information of the network storage server 302 that stores the video to be stored, the user information and time information corresponding to the video to be stored.

When the service provider terminal 301 stores a video, the video is associated with a user. Therefore, after obtaining the address information of the network storage server 302 that stores the video to be stored, the user information and time information corresponding to the video to be stored, the user terminal 303 may log in to the network storage server 302 with the user information and the address of the network storage server 302 that stores the video to be stored. The user terminal 303 then searches for and accesses the video to be stored in the network storage server 302 according to the time information corresponding to the video to be stored. Specifically, a user may review or download the video to be stored to a local memory. Moreover, it should be noted that, the video to be stored can only be accessed by an authorized user through the user terminal 303 with the user information and time information corresponding to the video to be stored.

In the video storage system according to an embodiment of the present application, the network storage server 302 receives a video storage instruction sent by the service provider terminal 301 through the interaction between the service provider terminal 301, the user terminal 303 and the network storage server 302. The network storage server 302 then records a video according to the video storage instruction. The service provider terminal 301 generates an access identifier for the video to be stored according to the address of the network storage server 302 that stores the video to be stored, and the user information and time information corresponding to the video to be stored, and provides the access identifier to the user terminal 303. The user terminal 303 obtains and analyzes the access identifier, and then logs in to the network storage server 302 according to the user information corresponding to the video to be stored, and searches for and obtains the video to be stored in the network storage server 302 according to the time information. With the video storage system according to the embodiment of the present application, a user can only access a video associated himself in the network storage server 302, but has no authenticated access to videos associated with other users. This improves the security of the video.

In an optional embodiment of the present application, the service provider terminal 301 sends a video-recording start instruction to the network storage server in the process of sending a video storage instruction to the network storage server 302 in real time. Upon receiving the video storage instruction, the network storage server 302 starts the video recording. The video-recording start instruction includes user information and a camera identifier corresponding to the video to be stored. The camera identifier is configured for indicating the channel for the video to be stored, that is, the network camera for the video to be stored in the network storage server 302. The service provider terminal 301 sends a video-recording end instruction to the network storage server when recording of the video to be stored is ended. The network storage server ends the video recording when a video-recording end instruction is received. Moreover, a time period between a time point corresponding to the video-recording start instruction and a time point corresponding to the video-recording end instruction is time information corresponding to the video to be stored.

In order to enable the user terminal 303 to find the video more quickly, a camera identifier may also be used in the process of the service provider terminal 301 generating the access identifier and in the process of the user terminal 303 searching for the video. Specifically, in the process of the service provider terminal 301 generating the access identifier, the service provider terminal 301 generates an access identifier according to the address of the network storage server 302, the user information and time information corresponding to the video to be stored and the camera identifier. Accordingly, the user terminal 303 obtains and analyzes the access identifier, to obtain the address information of a network storage server 302 that stores the video to be stored, the user information and time information corresponding to the video to be stored and the camera identifier corresponding to the video to be stored. The user terminal 303 then logs in to the network storage server 302 by using the user information, and searches and obtains the video to be stored in the network storage server 302 according to the time information and the camera identifier.

When the service provider terminal 301 sends a video storage instruction to the network storage server 302, the service provider terminal 301 may also generate a random access password for the video to be stored and send the random access password for accessing the video to be stored to the network storage server 302. After generating the random access password corresponding to the video to be stored, the service provider terminal 301 may also use the random access password in the process of generating an access identifier. Specifically, the service provider terminal 301 generates an access identifier according to the address information of the network storage server 302, the user information and time information corresponding to the video to be stored and the random access password.

In a case where the service provider terminal 301 uses the random access password in the process of generating the access identifier, the user terminal 303 can obtain, by analyzing the access identifier, from the identifier a random access password in addition to the address information of the network storage server 302 that stores the video to be stored and the user information and time information corresponding to the video to be stored. In this way, the user terminal 303 use the user information to log in to the network storage server 302, and searches for and obtains the video to be stored in the network storage server 302 according to the time information and the random access password. The security of video recording is further improved by combining the random access password.

In order to further improve the security of the video, before generating an access identifier, the service provider terminal 301 encrypts the address information of the network storage server 302 and the user information and time information corresponding to the video to be stored, to generate an access identifier according to the encrypted address information of the network storage server 302, the encrypted user information and time information corresponding to the video to be stored.

In a case where the service provider terminal 301 performs encryption in the process of generating an access identifier, the user terminal 303 decrypts the encrypted address information of the network storage server 302 that stores the video to be stored, the encrypted user information and time information corresponding to the video to be stored in the process of analyzing the access identifier, so as to obtain the address information of the network storage server 302 that stores the video to be stored, the user information and the time information corresponding to the video to be stored. The user terminal 303 then searches for and accesses the video to be stored according to the address information of the network storage server 302 that stores the video to be stored, the user information and the time information corresponding to the video to be stored.

The interaction between the service provider terminal 301 and the user terminal 303 in the embodiment of the present application will be described in detail with reference to FIG.3.

The administrator who provides videos and has the right to set videos can store the videos to the network storage server 302 through the service provider terminal 301. A user reviews or downloads a video from the network storage server 302 through the user terminal 303. The service provider terminal 301 video-records the process of providing a service, and at the same time, associates each video with a corresponding user, i.e., sets up information of a user that may access the video. The service provider terminal 301 adds a network camera to the network storage server 302 and sends a video-recording start instruction to the network storage server 302. After receiving the instruction sent by the service provider terminal 301, the network storage server 302 starts video-recording, and after receiving the stop recording instruction sent by the service provider terminal 301, the network storage server 302 ends the recording. In this way, the service provider terminal 301 completes the video recording and stores the video to the network storage server 302.

Then, the service provider terminal 301 combines the time period between the time point corresponding to the video-recording start instruction and the time point corresponding to the video-recording end instruction, the address of the network storage server 302 that stores the video, and the information of a user who can access the video to form an access identifier for accessing the video. Alternatively, the service provider terminal 301 may also generate an access identifier according to the identifier of a network camera that is utilized, and provide the access identifier to the user. For example, an access identifier in the form of a two-dimensional code is generated and displayed. A user receives the access identifier through the user terminal 303. For example, in practice, the two-dimensional code may be scanned to obtain the access identifier. Then the access identifier is analyzed. If the service provider terminal 301 does not use a network camera identifier in the process of generating the access identifier, the user terminal 303 can obtain the user information and time information corresponding to the video to be accessed, and the address of the network storage server 302 that stores the video. If the address of the network storage server 302 is known, the user terminal 303 can log in to the network storage server 302 with the user information, and then access the video according to the time information. For example, a user may review or download the video. If the service provider terminal 301 uses the network camera identifier in the process of generating the access identifier, then the user terminal 303 may obtain the user information and the time information corresponding to the video to be accessed, the address of the network storage server 302 that stores the video, and the camera identifier. The user terminal 303 logs in to the network storage server 302 with the address of the network storage server and the user information, and then accesses the video according to corresponding time information and the camera identifier. It may be seen that, with a camera identifier, the user terminal 303 may find the video to be accessed more quickly.

In order to improve the security of a video, the service provider terminal 301 may use other information to generate an access identifier when a video is stored. For example, when the video recording is started, a random access password corresponding to the video is generated. Then, when the access identifier is generated, the random access password is combined with the time period between the time point corresponding to the video-recording start instruction and the time point corresponding to the video-recording end instruction, the address of the network storage server 302 that stores the video, and user information of the user who can access the video, to generate an access identifier. Alternatively, the random access password is used in combination with the time period between the time point corresponding to the video-recording start instruction and the time point corresponding to the video-recording end instruction, the address of the network storage server 302 that stores the video, and the information of a user who can access the video, and the camera identifier to generate an access identifier. It should be noted that, if the service provider terminal 301 uses a random access password in the process of generating the access identifier, then in the corresponding process of analyzing the access identifier, in addition to the time period between the time point corresponding to the video-recording start instruction and the time point corresponding to the video-recording end instruction, the address of the network storage server 302 that stores the video, the information of the user who can access the video, and the camera identifier, the user terminal 303 can also obtain the random access password. Further, in the process of accessing a video, a random password based authentication is needed. Only the user who passes the authentication can have access to the video be accessed. This improves the security of video accessing.

In correspondence with the above video storage method, the embodiment of the present application further provides a video storage apparatus, which is applicable to a service provider terminal. FIG. 4 is a schematic diagram of a video storage apparatus according to an embodiment of the present application. The video storage apparatus according to the embodiment of the present application is described in detail with reference to FIG. 4. The apparatus includes a determination module 401, a sending module 402, a generating module 403, and a providing module 404.

The determining module 401 is configured for determining user information corresponding to a video to be stored.

The sending module 402 is configured for sending a video storage instruction to a network storage server. The video storage instruction includes the user information and time information corresponding to the video to be stored.

The generating module 403 is configured for generating an access identifier according to the address information of the network storage server, the user information and the time information corresponding to the video to be stored.

The providing module 404 is configured for providing the access identifier to a user corresponding to the video to be stored.

The video storage apparatus according to an embodiment of the present application associates the video to be stored to a user, determines user information corresponding to the video to be stored, and sends a video storage instruction to the network storage server so that the network storage server records a video in real time or the video that has been recorded and stored in a local memory such as a hard disk video recorder is obtained directly. Then, an access identifier of the video to be stored is generated according to the address information of a network storage server that stores the video to be stored, the user information and time information corresponding to the video to be stored. The access identifier is provided to the user corresponding to the video to be stored. Through the video storage apparatus according to an embodiment of the present application, a video to be stored corresponds to an access identifier is associated with the address information of the network storage server that stores the video to be stored, the user information and time information corresponding to the video to be stored, so that the user who has the right to access the video to be stored accesses the video to be stored according to the information included in the access identifier, and a user can only access the video associated with himself, but cannot access a video associated with another user. This improves the security of videos and protects the private information of users.

Optionally, the sending module 402 in the video storage apparatus according to an embodiment of the present application includes:
a first sending sub-module, configured for sending a video-recording start instruction to the network storage server. The video-recording start instruction includes user information and a camera identifier corresponding to the video to be stored;
a second sending sub-module, configured for sending a video-recording end instruction to the network storage server when video-recording of the video to be stored is completed. The time period between a time point corresponding to the video-recording start instruction and a time point corresponding to the video-recording end instruction is the time information corresponding to the video to be stored.

The generating module 403 is specifically configured for generating an access identifier according to the address information of the network storage server, the user information and the time information corresponding to the video to be stored and the camera identifier.

Optionally, the video storage apparatus according to an embodiment of the present application further includes: a password generating module.

The video storage instruction also includes a random access password.

The generating module 403 is further configured for generating an access identifier according to the address information of the network storage server, the user information and the time information corresponding to the video to be stored and the random access password.

Optionally, the video storage apparatus according to an embodiment of the present application further includes: an encrypting module, which is configured for encrypting the address information of the network storage server, the user information and the time information corresponding to the video to be stored.

The generating module 403 is further configured for generating an access identifier according to the encrypted address information of the network storage server, the encrypted user information and the encrypted time information corresponding to the video to be stored.

Optionally, in the video storage apparatus according to an embodiment of the present application, the user information includes a user name and a password.

Optionally, in the video storage apparatus according to an embodiment of the present application, the access identifier includes a two-dimensional code, a barcode, and a character code.

It should be noted that the video storage apparatus of the embodiment of the present application is an apparatus that can perform the above-mentioned video storage method. All the embodiments of the above-mentioned video storage method are applicable to the apparatus and can achieve the same or similar beneficial effects.

Corresponding to the above video access method, the embodiment of the present application further provides a video accessing apparatus, applicable to a user terminal. FIG. 5 is a schematic diagram of a video accessing apparatus according to an embodiment of the present application. The video accessing apparatus according to the embodiment of the present application is described in detail with reference to FIG. 5. The apparatus includes an obtaining module 501, an analyzing module 502, and an accessing module 503.

The obtaining module 501 is configured for obtaining an access identifier of a video to be accessed. The access identifier includes address information of a network storage server that stores the video to be accessed, user information and time information corresponding to the video to be accessed.

The analyzing module 502 is configured for analyzing the access identifier to obtain the address information of the network storage server that stores the video to be accessed, and the user information and the time information corresponding to the video to be accessed.

The accessing module 503 is configured for logging in to the network storage server by using the user information, and searching for and obtaining the video to be accessed in the network storage server according to the time information.

In the video accessing apparatus provided by an embodiment of the present application, he user terminal obtains an access identifier provided by the service provider terminal, analyzes the access identifier to obtain user information and time information corresponding to a video to be accessed, and searches for and accesses the video to be accessed according to the user information and the time information corresponding to the video to be accessed. When having an authority, i.e., knowing the user information and the time information corresponding to the video to be accessed, a user may access the video to be accessed through the user terminal. In this way, a user can only access the video associated with him. This improves the security of the video associated then user and protects the privacy information of the user .

Optionally, in the video accessing apparatus according to an embodiment of the present application, the access identifier further includes: a random access password for accessing the video to be accessed.

The analyzing module 502 is further configured for analyzing the access identifier to obtain the address information of the network storage server that stores the video to be accessed, the user information and time information corresponding to the video to be accessed and the random access password.

The accessing module 503 is configured for logging in to the network storage server by using the user information, and searching for and obtaining the video to be accessed in the network storage server according to the time information and the random access password.

Optionally, in the video accessing apparatus according to an embodiment of the present application, the access identifier further includes: a camera identifier corresponding to the video to be accessed.

The analyzing module 502 is further configured for analyzing the access identifier to obtain the address information of the network storage server that stores the video to be accessed, and the user information and time information corresponding to the video to be accessed and the camera identifier corresponding to the video to be accessed.

The accessing module 503 is further configured for logging in to the network storage server by using the user information, and searching for and obtaining the video to be accessed in the network storage server according to the time information and the camera identifier.

Optionally, in the video accessing apparatus according to an embodiment of the present application, the analyzing module 502 is specifically configured for decrypting encrypted address information of the network storage server that stores the video to be accessed, encrypted user information and time information corresponding to the video to be accessed, to obtain the address information of the network storage server that stores the video to be accessed, the user information and the time information corresponding to the video to be accessed.

Optionally, in the video accessing apparatus according to an embodiment of the present application, the user information includes a user name and a password.

Optionally, in the video access apparatus according to an embodiment of the present application, the access identifier includes a two-dimensional code, a barcode, and a character code.

It should be noted that the video accessing apparatus of the embodiment of the present application is an apparatus that can perform the above-mentioned video access method. All the embodiments of the above-mentioned video access method are applicable to the apparatus and can achieve the same or similar beneficial effects.

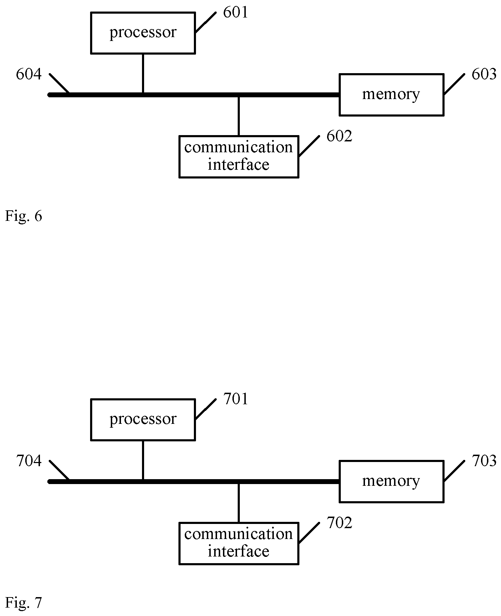

In addition, corresponding to the video storage method according to the above embodiment, the embodiment of the present application provides a video storage device. As shown in FIG. 6, the video storage device includes a processor 601, a memory 603, a communication interface 602, and a bus 604.

The processor 601, the memory 603 and the communication interface 602 are communicatively connected with each other via the bus 604.

The memory 603 stores executable program codes;

The processor 601 reads the executable program codes stored in the memory 603 to execute a program, so as to perform the video storage method according to the embodiment of the present application. Specifically, the video storage method according to an embodiment of the present application includes:
determining user information corresponding to a video to be stored;
sending a video storage instruction to a network storage server, wherein, the video storage instruction includes the user information and time information corresponding to the video to be stored;
generating an access identifier according to address information of the network storage server, the user information and the time information corresponding to the video to be stored; and
providing the access identifier to a user corresponding to the video to be stored.

In this embodiment, the processor of the video storage apparatus reads the executable program codes stored in the memory to execute a program. The program, when executed, performs the video storage method according to an embodiment of the present application at runtime. In this way, a video to be stored is associated with an access identifier generated according to the address information of the network storage server that stores the video to be stored, and the user information and the time information corresponding to the video to be stored. As such, a user who has the right to access the video to be stored can access the video to be stored according to the information included in the access identifier. This improves the security of the video when the user accesses the video.

In addition, corresponding to the video access method according to the above embodiment, the embodiment of the present application provides a video accessing apparatus. As shown in FIG. 7, the video accessing apparatus includes a processor 701, a memory 703, a communication interface 702, and a bus 704.

The processor 701, the memory 703 and the communication interface 702 are communicatively connected with each other via the bus 704.

The memory 703 stores executable program codes.

The processor 701 r reads the executable program codes stored in the memory 603 to execute a program, so as to perform the video access method according to the embodiment of the present application. Specifically, the video access method according to an embodiment of the present application includes:
obtaining an access identifier of a video to be accessed, wherein the access identifier includes address information of a network storage server that stores the video to be accessed, user information and time information corresponding to the video to be accessed;
analyzing the access identifier to obtain the address information of the network storage server that stores the video to be accessed, and the user information and time information corresponding to the video to be accessed; and
logging in to the network storage server by using the user information, and searching for and obtaining the video to be accessed in the network storage server according to the time information.

In this embodiment, the processor of the video storage apparatus reads the executable program codes stored in the memory to execute a program. The program, when executed, performs the video access method according to an embodiment of the present application at runtime. As such, a user can only access a video to be accessed that is associated with himself. This improves the security of the video associated with each user and protects user privacy.

In addition, corresponding to the video storage method according to the above embodiment, the embodiment of the present application provides a storage medium for storing executable codes. The executable codes, when executed, perform the video storage method according to an embodiment of the present application. Specifically, the video storage method according to an embodiment of the present application includes:
determining user information corresponding to a video to be stored;
sending a video storage instruction to a network storage server, wherein, the video storage instruction includes the user information and time information corresponding to the video to be stored;
generating an access identifier according to address information of the network storage server, the user information and the time information corresponding to the video to be stored; and
providing the access identifier to a user corresponding to the video to be stored.

In this embodiment, the storage medium stores an application program which when executed, performs the video storage method according to an embodiment of the present application. In this way, a video to be stored is associated with an access identifier generated according to the address information of the network storage server that stores the video to be stored, and the user information and the time information corresponding to the video to be stored. As such, a user who has the right to access the video to be stored can access the video to be stored according to the information included in the access identifier. This improves the security of the video when the user access the video.

In addition, corresponding to the video access method according to the above embodiment, the embodiment of the present application provides a storage medium for storing executable codes. The executable code, when executed, performs the video access method according to an embodiment of the present application. Specifically, the video access method according to an embodiment of the present application includes:
obtaining an access identifier of a video to be accessed, wherein the access identifier includes address information of a network storage server that stores the video to be accessed, user information and time information corresponding to the video to be accessed;
analyzing the access identifier to obtain the address information of the network storage server that stores the video to be accessed, and the user information and time information corresponding to the video to be accessed; and
logging in to the network storage server by using the user information, and searching for and obtaining the video to be accessed in the network storage server according to the time information.

In this embodiment, the storage medium stores an application program which, when executed, performs the video access method according to an embodiment of the present application. As such, a user can only access a video to be accessed that is associated with himself. This improves the security of the video associated with each user and protects user privacy.

In addition, corresponding to the video storage method according to the above embodiment, the embodiment of the present application provides an application program for performing the video storage method according to an embodiment of the present application. Specifically, the video storage method according to an embodiment of the present application includes:
determining user information corresponding to a video to be stored;
sending a video storage instruction to a network storage server, wherein, the video storage instruction includes the user information and time information corresponding to the video to be stored;
generating an access identifier according to address information of the network storage server, the user information and the time information corresponding to the video to be stored; and
providing the access identifier to a user corresponding to the video to be stored.

In this embodiment, the application program, when executed, performs the video storage method according to an embodiment of the present application. In this way, a video to be stored is associated with an access identifier generated according to the address information of the network storage server that stores the video to be stored, and the user information and the time information corresponding to the video to be stored. As such, a user who has the right to access the video to be stored can access the video to be stored according to the information included in the access identifier. This improves the security of the video when the user accesses the video.

In addition, corresponding to the video access method according to the above embodiment, the embodiment of the present application provides an application program for performing the video access method according to an embodiment of the present application when being executed. Specifically, the video access method according to an embodiment of the present application includes:
obtaining an access identifier of a video to be accessed, wherein the access identifier includes address information of a network storage server that stores the video to be accessed, user information and time information corresponding to the video to be accessed;
analyzing the access identifier to obtain the address information of the network storage server that stores the video to be accessed, and the user information and time information corresponding to the video to be accessed; and
logging in to the network storage server by using the user information, and searching for and obtaining the video to be accessed in the network storage server according to the time information..

In this embodiment, the application program, when executed, performs the video access method according to an embodiment of the present application. As such, a user can only access a video to be accessed that is associated with himself. This improves the security of the video associated with each user and protects user privacy.

It should be noted that the relationship terms herein such as "first", "second", and the like are only used for distinguishing one entity or operation from another entity or operation, but do not necessarily require or imply that there is any actual relationship or order between these entities or operations. Moreover, the terms "include", "include" or any other variants thereof are intended to cover non-exclusive inclusions, so that processes, methods, articles or devices including a series of elements include not only those elements listed but also those not specifically listed or the elements intrinsic to these processes, methods, articles, or devices. Without further limitations, elements defined by the sentences "include(s) a." or "include(s) a." do not exclude that there are other identical elements in the processes, methods, articles, or devices which include these elements.

All of the embodiments in the description are described in a correlated manner, and various embodiments may share identical or similar parts. The description for each embodiment focuses on the differences from other embodiments. In particular, a brief description is provided to the system embodiment in view of their resemblance to the method embodiments. Relevant details can be known with reference to the description of the method embodiments.

The embodiments described above are simply preferable embodiments of the present application, and are not intended to limit the scope of protection of the present application. Any modifications, alternatives, improvements, or the like within the spirit and principle of the present application shall be included within the scope of protection of the present application.

## Claims

1. A video storage method, applicable to a service provider terminal and comprising:
determining user information corresponding to a video to be stored;
sending a video storage instruction to a network storage server, wherein, the video storage instruction comprises the user information and time information corresponding to the video to be stored;
generating an access identifier according to address information of the network storage server, the user information and the time information corresponding to the video to be stored; and
providing the access identifier to a user corresponding to the video to be stored.

2. The method according to claim 1, wherein, sending a video storage instruction to a network storage server comprises:
sending a video-recording start instruction to the network storage server, wherein the video-recording start instruction comprises the user information and a camera identifier corresponding to the video to be stored;
sending a video-recording end instruction to the network storage server when video-recording of the video to be stored is ended, wherein the time information corresponding to the video to be stored is a time period between a time point corresponding to the video-recording start instruction and a time point corresponding to the video-recording end instruction;
wherein, generating an access identifier according to address information of the network storage server, the user information and the time information corresponding to the video to be stored comprises:
generating an access identifier according to the address information of the network storage server, the user information and the time information corresponding to the video to be stored and the camera identifier.

3. The method of claim 1 or 2, further comprising:
generating a random access password for accessing the video to be stored;
the video storage instruction also comprises the random access password;
wherein, generating an access identifier according to address information of the network storage server, the user information and the time information corresponding to the video to be stored comprises:
generating an access identifier according to the address information of the network storage server, the user information and the time information corresponding to the video to be stored and the random access password.

4. The method of claim 1 or 2, wherein, before generating an access identifier according to address information of the network storage server, the user information and the time information corresponding to the video to be stored, the method further comprises:
encrypting the address information of the network storage server, the user information and the time information corresponding to the video to be stored;
wherein, generating an access identifier according to address information of the network storage server, the user information and the time information corresponding to the video to be stored comprises:
generating an access identifier according to the encrypted address information of the network storage server, the encrypted user information and the encrypted time information corresponding to the video to be stored.

5. The method of claim 1 or 2, wherein, the user information comprises a user name and a password.

6. The method of claim 1 or 2, wherein, the access identifier comprises a two-dimensional code, a barcode, and a character code.

7. A video access method, applicable to a user terminal and comprising:
obtaining an access identifier of a video to be accessed, wherein the access identifier comprises address information of a network storage server that stores the video to be accessed, user information and time information corresponding to the video to be accessed;
analyzing the access identifier to obtain the address information of the network storage server that stores the video to be accessed, and the user information and time information corresponding to the video to be accessed; and
logging in to the network storage server by using the user information, and searching for and obtaining the video to be accessed in the network storage server according to the time information.

8. The method of claim 7, wherein, the access identifier further comprises: a random access password for accessing the video to be accessed;
analyzing the access identifier comprises:
analyzing the access identifier to obtain the address information of the network storage server that stores the video to be accessed, the user information and time information corresponding to the
video to be accessed and the random access password;
logging in to the network storage server by using the user information, and searching for and obtaining the video to be accessed in the network storage server according to the time information comprises:
logging in to the network storage server by using the user information, and searching for and obtaining the video to be accessed in the network storage server according to the time information and the random access password.

9. The method of claim 7 or 8, wherein, the access identifier further comprises: a camera identifier corresponding to the video to be accessed;
wherein, analyzing the access identifier comprises:
analyzing the access identifier to obtain the address information of the network storage server that stores the video to be accessed, the user information and time information corresponding to the
video to be accessed and the camera identifier corresponding to the video to be accessed;
wherein, logging in to the network storage server by using the user information, and searching for and obtaining the video to be accessed in the network storage server according to the time information comprises:
logging in to the network storage server by using the user information, and searching for and obtaining the video to be accessed in the network storage server according to the time information and the camera identifier.

10. The method of claim 7 or 8, wherein, obtaining the address information of the network storage server that stores the video to be accessed, and the user information and the time information corresponding to the video to be accessed comprises:
decrypting encrypted address information of the network storage server that stores the video to be accessed, encrypted user information and time information corresponding to the video to be accessed, to obtain the address information of the network storage server that stores the video to be accessed, the user information and the time information corresponding to the video to be accessed.

11. The method of claim 7 or 8, wherein, the user information comprises a user name and a password.

12. The method of claim 7 or 8, wherein, the access identifier comprises a two-dimensional code, a barcode, and a character code.

13. A video storage system, comprising: a service provider terminal, a network storage server, and a user terminal;
the service provider terminal is configured for determining user information corresponding to a video to be stored, and sending a video storage instruction to the network storage server, wherein, the video storage instruction comprises the user information and time information corresponding to the video to be stored;
the network storage server is configured for recording the video to be stored according to the user information and the time information in a video-recording start instruction;
the service provider terminal is further configured for generating an access identifier according to address information of the network storage server, the user information and the time information corresponding to the video to be stored, and providing the access identifier to the user terminal; and
the user terminal is configured for obtaining and analyzing the access identifier to obtain the address information of the network storage server that stores the video to be stored, and the user information and the time information corresponding to the video to be stored; logging in to the network storage server by using the user information, and searching for and obtaining the video to be stored in the network storage server according to the time information.

14. The system of claim 13, wherein, the service provider terminal is further configured for sending a video-recording start instruction to the network storage server, wherein the video-recording start instruction comprises the user information and a camera identifier corresponding to the video to be stored; and sending a video-recording end instruction to the network storage server when video-recording of the video to be stored is ended, wherein the time information corresponding to the video to be stored is a time period between a time point corresponding to the video-recording start instruction and a time point corresponding to the video-recording end instruction;
the network storage server is configured for starting video-recording of the video to be stored when receiving the video-recording start instruction, and ending the video-recording when receiving the video-recording end instruction;
the service provider terminal is further configured for generating an access identifier according to the address information of the network storage server, the user information and the time information corresponding to the video to be stored and the camera identifier;
the user terminal is further configured for obtaining and analyzing the access identifier to obtain the address information of the network storage server that stores the video to be stored, the user information and the time information corresponding to the video to be stored and the camera identifier corresponding to the video to be stored; logging in to the network storage server by using the user information, and searching for and obtaining the video to be stored in the network storage server according to the time information and the camera identifier.

15. The system of claim 13 or 14, wherein, the service provider terminal is further configured for sending a random access password for accessing the video to be stored to the network storage server; and generating an access identifier according to the address information of the network storage server, the user information and the time information corresponding to the video to be stored and the random access password;
the user terminal is further configured for obtaining and analyzing the access identifier to obtain the address information of the network storage server that stores the video to be stored, the user information and the time information corresponding to the video to be stored and the random access password; logging in to the network storage server by using the user information; and searching for and obtaining the video to be stored in the network storage server according to the time information and the random access password.

16. The system of claim 13 or 14, wherein, the service provider terminal is further configured for encrypting the address information of the network storage server, the user information and the time information corresponding to the video to be stored; and generating an access identifier according to the encrypted address information of the network storage server, the encrypted user information and the encrypted time information corresponding to the video to be stored;
the user terminal is further configured for decrypting the encrypted address information of the network storage server that stores the video to be stored, the encrypted user information and the encrypted time information corresponding to the video to be stored, to obtain the address information of the network storage server that stores the video to be stored, the user information and the time information corresponding to the video to be stored.

17. The system of claim 13 or 14, wherein, the service provider terminal is further configured for adding a network camera to the network storage server;
the network storage server is configured for video recording with the network camera added by the service provider terminal.

18. The system of claim 13 or 14, wherein, the user information comprises a user name and a password.

19. The system of claim 13 or 14, wherein, the access identifier comprises a two-dimensional code, a barcode, and a character code.

20. A video storage device, comprising: a processor, a memory, a communication interface, and a bus;
the processor, the memory and the communication interface are communicatively connected with each other via the bus;
the memory stores an executable program code;
the processor reads the executable program code stored in the memory to execute a program which, when executed, performs the video access method of any one of claims 1-6.

21. A video access device, comprising: a processor, a memory, a communication interface, and a bus;
the processor, the memory and the communication interface are communicatively connected with each other via the bus;
the memory stores an executable program code;
the processor reads the executable program code stored in the memory to execute a program which, when executed, performs the video access method of any one of claims 7-12.

22. A storage medium having an executable code stored thereon which, when executed, performs the video storage method of any one of claims 1-6.

23. A storage medium having an executable code stored thereon which, when executed, performs the video access method of any one of claims 7-12.

24. An application program which, when executed, performs the video storage method of any one of claims 1-6.

25. An application program which, when executed, performs the video access method of any one of claims 7-12.
